# EUROPEAN PATENT SPECIFICATION

(11) **EP 3 954 567 B1**
(45) Date of publication and mention of the grant of the patent: **24.05.2023**
(21) Application number: 20190790.4
(22) Date of filing: 12.08.2020
(51) Int. Cl.: B60K 35/00, B60K 37/00, B60Q 3/14, B60R 13/02

(54) **INTERIOR PART OF A VEHICLE, METHOD FOR MANUFACTURING A SURFACE BODY OF SUCH AN INTERIOR PART AND VEHICLE COMPRISING SUCH AN INTERIOR PART**
INNENTEIL EINES FAHRZEUGS, VERFAHREN ZUR HERSTELLUNG EINES OBERFLÄCHENKÖRPERS SOLCH EINES INNENTEILS UND FAHRZEUG MIT SOLCH EINEM INNENTEIL
PARTIE INTÉRIEURE D'UN VÉHICULE, PROCÉDÉ DE FABRICATION D'UN CORPS DE SURFACE D'UNE TELLE PARTIE INTÉRIEURE ET VÉHICULE COMPRENANT UNE TELLE PARTIE INTÉRIEURE

(43) Date of publication of application: 16.02.2022
(73) Proprietor: Motherson Innovations Company Limited, London EC2N 2AX (GB)
(72) Inventor: WEINGÄRTNER, Torsten, 79108 Freiburg (DE); BUCHET, Yann, 67000 Strasbourg (FR)
(74) Representative: Westphal, Mussgnug & Partner Patentanwälte mbB

(56) References cited:
- DE-A1-102016 219 288
- DE-U1-202017 104 082
- US-B1- 10 696 218

## Description

The present invention relates to an interior part of a vehicle. Furthermore, the present invention is directed to a method for manufacturing a surface body as a decorative top layer of such an interior part. Beyond that the present invention relates to a vehicle comprising such an interior part.

Ambient lighting is a key feature of modern vehicles by which the appearance of a passenger compartment can be set individually. Communication between vehicle and passenger is becoming more and more important, especially with the advancement of autonomous driving. Lighting in the passenger compartment is taking over specific tasks, like the visual indication of functions and warnings in the vehicle. Ambient lighting is increasingly becoming functional light. Lighting the passenger compartment is becoming an important part of the design leading to an increase of the passenger comfort.

The light emitting devices can be arranged in manifold locations of interior parts of modern vehicles that are visible from the passenger compartment. Examples of such interior parts are instrument panels, door panels, center consoles, headliner and vehicle seats. The respective layout of illuminated interior parts comprises a surface body that is visible from the passenger compartment. The surface body transmits light but diffuses or scatters the light so that objects cannot be seen through it from a certain distance. To this end the surface body has a transmittance to light of at least 1% and is considered as translucent. The surface body comprises a first surface and a second surface. The second surface is visible from the passenger compartment. The first surface is laminated on a soft or a solid carrier body. Moreover, a light emitting device that emits light is arranged such that the light emitted by the light emitting device impinges on the first surface. Seen from the passenger compartment the light emitting device is arranged behind the surface body.

To create certain light patterns a layer is applied to the first surface that transmits light without scattering and with little absorption, so that objects can be seen through it. Thus the first surface has a certain transmittance to light that is below 100%. Layers having a transmittance of 100% or almost 100% are considered as transparent to light whereas layers impervious to the passage of light are opaque and thus have a transmittance of 0% or almost 0%. For a further definition of the terms transparent, translucent and opaque, references is made to the also Dictionary of Optometry and Visual Science (Michel Millodot 2009).

The way to create certain light patterns by employing layers of different transmittances to light is also referred to as "masking".

In most cases the masking layer applied to the first surface of the surface body is opaque. Usually opaque layers are black or very dark. In case the surface body is black or dark grey the black or dark masking layer is not visible from the passenger compartment. However, in case the surface body is brown or beige a black or dark masking layer would be perceptible from the passenger compartment, due to the transmittance of the surface body. In particular when the interior part is exposed to strong sun light or other bright light sources the layer is highly visible. Perceptible layers are considered as having a detrimental effect to the perceived quality of the interior part of the vehicle and thus of the vehicle as such. It is one task of the present invention to propose an interior part of a vehicle having a surface body with a homogeneous appearance, whether the interior part is exposed to sun light or not, and that allows for an easy provision of different light patterns. Beyond that it is one objective of the present invention to present a method by which such interior parts may be manufactured in a fast, flexible and cost-efficient way. Furthermore, an embodiment of the present invention has the objective to provide a vehicle comprising such an interior part.

DE 10 2017 104 082 U1, DE 10 2016 219 288 A2 and US 10 696 218 B1 are mentioned as state of the art documents.

According to the present invention an interior part of a vehicle comprises
- at least one carrier body
   o having a transmittance for light of at least 1%, and
   o having a given color,
- a surface body
   o forming a first surface and a second surface,
   o having a transmittance for light of at least 1%,
   o being laminated to the carrier body, and
   o having a given color,
- at least one light emitting device emitting light and arranged such that the light emitted by the light emitting device impinges on the first surface,
- a first layer and a second layer being arranged on top of each other,
- at least one masking section applied to the first surface or the second surface, the masking section comprising
   o a first layer and a second layer being arranged on top of each other,
   ∘ the first layer having a color adjusted to the color of the surface body and/or to the carrier body.

The term "laminated" is to be understood such that the surface body is fastened to the carrier body. A direct contact is not mandatory. The second layer is black or dark, thereby providing opaqueness. The color of the first layer is adjusted to the color of the surface body and/or to the color (in particular with respect to transmission and reflection rate) of the carrier body. The masking section is consequently not or hardly perceptible from the passenger compartment, thereby providing a homogeneous appearance to the respective interior part.

According to the invention the masking section partially covers the first surface by forming gaps, and at least one filling layer is applied to the first surface filling at least some of the gaps and having a filling layer transmittance for light.

Gaps are usually needed to create a specific light pattern. The emitted light can thus penetrate the surface body only through the gaps. By filling the gaps by the filling layer optical flaws such as sink marks can be avoided. The appearance of the interior part provided with such a surface body is very homogenous, regardless of whether or not the light emitting device is turned on. The first layer, the second layer and the filling layer can have a very similar composition, mainly differing in the transmittance for light and color. The more similar the composition the easier the lamination process. Moreover, the stiffness they provide to the surface body is almost the same. The generation of stress as a result of temperature differences acting on the interior part can be kept low.

According to the invention the interior part comprises a first filling layer that is flush with the first layer, and a second filling layer that this flush with the second layer. In this embodiment the first layer and the first filling layer can be applied in the same application step, in particular by printing. The same is true for the second layer and the second filling layer that can be applied on the first layer and the first filling layer by a single further application step. The manufacturing process is kept simple and fast.

According to another embodiment the masking section further comprises a third layer, the third layer having reflective properties. Due to the reflective properties of the third layer light emitted by the light emitting device and impinging on the third layer is redirected back into the carrier body. From the carrier body the light may be reflected such that it penetrates the filling layer. The exploitation of the light emitted by the emitting device can thus be increased.

In a further embodiment the interior part comprises a third filling layer that is flush with the third layer. In this embodiment the third layer and the third filling layer can be applied in the same application step, in particular by printing. The manufacturing process is kept simple and fast.

In accordance with another embodiment the interior part comprises
- at least one first masking section comprising
   o at least one primary first layer and at least one primary second layer being arranged on top of each other,
   o the first masking section being arranged on the first surface,
- a filling layer applied to the first surface,
- at least one second masking section comprising
   o at least one primary second layer and at least one secondary second layer being arranged on top of each other,
   o the second masking section being arranged on the filling layer.

As a consequence the primary first layer has a different distance from the light emitting device with regard to the secondary first layer. The scattering depends on the distance from the light emitting device. As a consequence the light pattern created by the primary first layer may have a sharp and clear contour while the light pattern created by the secondary first layer may be more blurred or diffuse. The variety of the light patterns can thereby be increased.

According to another embodiment at least one masking section is applied to the second surface and at least one additional surface body is laminated to the second surface. The stability of the interior part can be further improved. Moreover, the additional surface body provides a certain protection to the remaining components of the interior part. Consequently this embodiment may be particularly suited for interior parts that are prone to wear such as door panels.

Another embodiment is characterized in that
- the second surface is facing the interior of the vehicle, and
- the gaps that are not filled by the filling layer being arranged such that the gaps are invisible from the interior of the vehicle.

Some of the interior parts of the vehicle are only partially visible from the passenger compartment. Examples may be the area of fastening sections by which the interior parts are fastened to a vehicle structure and where the interior parts may be covered by a vehicle trim part. The gaps arranged in the sections of the surface body that are not visible from the passenger compartment may not be filled with the filling layer. This allows the amount of filling material to be kept small and the lamination application kept short without negatively influencing the appearance of the respective interior part.

A realization of the present invention is directed to a method for manufacturing a surface body of an interior part of one of the preceding claims, the interior part being of a vehicle, comprising the steps of:
- providing a surface body, and
   ∘ printing the first layer on the first surface and
   ∘ printing the second layer on the first layer by means of a printer in the same step, or
- providing a surface body, and
   ∘ applying the first layer on the first surface by means of a first layer application device,
   ∘ drying and/or curing the first layer, and
   o applying the second layer on the first layer by means of a second layer application device.

The technical effects and advantages as discussed with regard to the present interior part equally apply to the vehicle. Briefly, as the color of the first layer is adjusted to the color of the surface body a homogeneous appearance of the interior part can be obtained even upon exposure to strong sun light. Moreover, the application of the different layers on the surface body is fairly easy, in particular when the layers can be printed. In this case the layers applied to the surface body may be constituted by ink. In particular using digital printing very individual light patterns may be generated. The customer may provide a graphic file defining a picture when ordering the vehicle. The ink is applied to the surface body such that a light pattern corresponding to the picture included in the graphic file can be generated. A very high degree of individualization is provided.

Other application devices may be cylinders by which the different layers are rolled on the surface body (roll-to-roll printing). Alternatively screen-printing may be used. In this case a screen instead of a roll is used to apply the layers. The throughput of surface bodies generating the same light pattern can thereby be increased.

The printer may comprise a plurality of cartridges such that different layers can be applied on the first surface or on other layers in the same step. The manufacturing process is accelerated.

According to another embodiment the method comprises the step of printing a filling layer on the first surface by means of a printer. The printer may be the same used for the application of the first layer and the second layer. The filling layer can simultaneously applied with the first layer and the second layer. The manufacturing is simple and short.

According to another embodiment the method comprises the step of printing a filling layer on the first surface by means of filling layer application device. The filling layer may not only be printed but also applied by other methods.

Once all the desired layers are applied the surface body may be bonded to the carrier body.

Another example of the invention is directed to a vehicle comprising an interior part according to one of the embodiments discussed above. The technical effects and advantages as discussed with regard to the present interior part equally apply to the vehicle. Briefly, the first layer and the second layer are not or hardly visible from the passenger compartment. Further, by filling the gaps with the filling layer optical flaws such as sink marks can be avoided without reducing the quality of the generated light patterns.

The present invention is described in detail with reference to the drawings attached wherein
- Figure 1: is a principle cross sectional view through an interior part according to the prior art,
- Figure 2: is a principle top view on a vehicle comprising a number of interior parts according to the present invention,
- Figure 3: is a principle cross sectional view through an interior part according to a first embodiment not according to the present invention,
- Figure 4: is a principle cross sectional view through an interior part according to a second embodiment not according to the present invention,
- Figure 5: is a principle cross sectional view through an interior part according to a third embodiment not according to the present invention,
- Figure 6: is a principle cross sectional view through an interior part according to a fourth embodiment which is according to the present invention,
- Figure 7: is a principle cross sectional view through an interior part according to a fifth embodiment not according to the present invention,
- Figure 8: is a principle cross sectional view through an interior part according to a sixth embodiment which is according to the present invention,
- Figure 9: is a principle cross sectional view through an interior part according to a seventh embodiment which is according to the present invention,

- Figures 10A to 10C: is a given light pattern with different sharpness,
- Figure 11: is a principle cross sectional view through an interior part according to an eighth embodiment not according to the present invention,
- Figure 12: is a principle cross sectional view through an interior part according to a ninth embodiment of the present invention,
- Figure 13A to 13C: are principle sketches showing a first method to apply different layers on the surface body, and
- Figures 14A to 14D: are principle sketches showing a second method of applying different layers on the surface body.

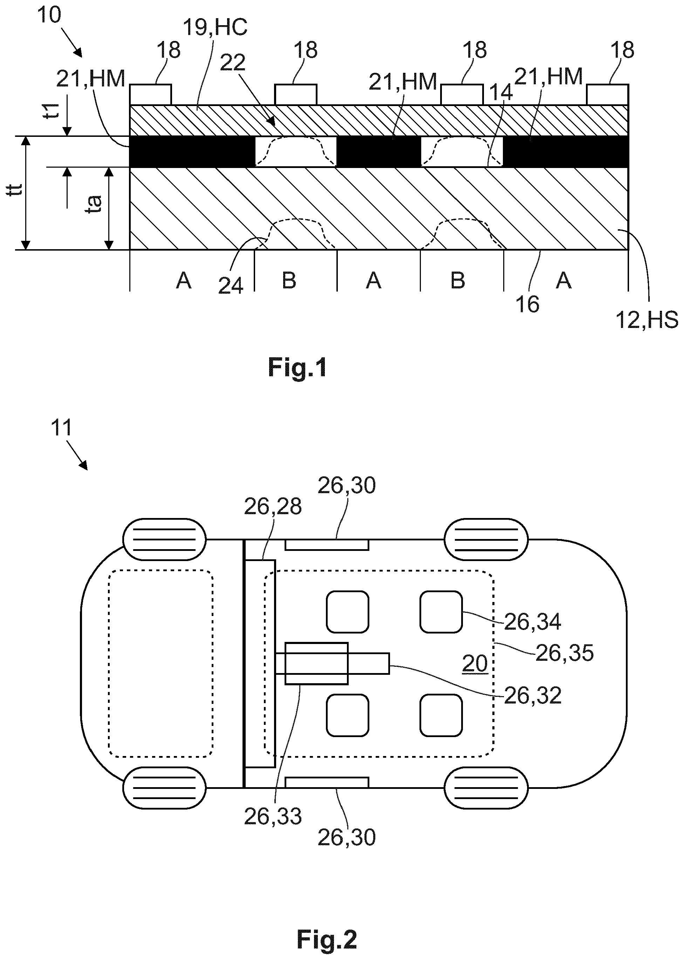

Figure 1 is a principle cross sectional view through an interior part 10 of a vehicle 11 (see Figure 2) according to the prior art. The interior part 10 comprises a surface body 12 forming a first surface 14 and a second surface 16. The surface body 12 is laminated to a carrier body 19. Moreover, the interior part 10 comprises a light emitting device 18 that emits light. The light emitting device 18 may be embodied as a light guide that is interacting with a light emitting device such as an LED or a light bulb (not shown). The light emitting device 18 introduces the light into the interior part 10 where it emits the light. The light emitting device 18 may be fastened to the carrier body 19. Alternatively the light emitting device 18 may be integrated into the carrier body 19. Particularly in this case the light emitting device 18 may be embodied as textile fibers. The carrier body 19 is transparent or translucent. The transmittance HC for light of the carrier body 19 is at least 1% but usually much higher, in particular above 80%.

The light emitting device 18 is arranged relative to the surface body 12 such that the light emitted by the light emitting device 18 impinges on the first surface 14. As the surface body 12 has a transmittance HS for light of at least 1% some of the light penetrates the surface body 12 and leaves the surface body 12 via the second surface 16. The second surface 16 faces the interior of the vehicle 11, in particular the passenger compartment 20 of the vehicle 11 (see Figure 2). The light that has penetrated the surface body 12 is thus perceptible for passengers present in the passenger compartment 20.

A masking layer 21 is directly applied to the first surface 14 and thus arranged between the surface body 12 and the carrier body 19. The masking layer 21 only partially covers the first surface 14 such that gaps 22 are formed. It is noted that Fig-ure 1 is a principle sketch not true to scale. The surface body 12 is flexible and the carrier body 19 is flexible or solid. As the masking layer 21 is very thin the gaps 22 usually do not extend between two neighboring sections of the masking layers 21, in particular in case the distance between two neighboring sections is comparatively large. Between two neighboring sections the carrier body 19 and the surface body 12 are usually in contact with each other and bonded to each other. However, the carrier body 19 and the surface body 12 may indirectly be fastened to each other.

The masking layer 21 has a first transmittance HM for light which is in this case 0% or almost 0% such that the masking layer 21 is opaque or almost opaque. As a consequence the light that impinges the masking layer 21 cannot penetrate therethrough. The light can only penetrate the surface body 12 in the gaps 22.

The areas marked with A are covered by the masking layer 21 and appear dark whereas areas marked with B are not covered and appear brighter for the passenger situated in the passenger compartment 20. A respective light pattern is created that is visible from the passenger compartment 20.

The surface body thickness ta is usually in the range between 0.1 and 4 mm whereas the first thickness t1 of the masking layer 21 is between 0.01 and 0.1 mm. The respective transmittance HM for light of the masking layer 21 is 0% or close to 0%. The opaque or almost masking layer 21 is black or of a very dark color. Depending on the color of the surface body 12 and the carrier body 19 the masking layer 21 may be visible from the passenger compartment 20. In case the surface body 12 is black or of a dark color the masking layer 21 is usually not or only hardly visible. However, when the surface body 12 has a color that significantly differs from black such as brown or beige and the contrast between the carrier body and the masking layer 21 is high, the masking layer 21 is visible from the passenger compartment, in particular due to the transmittance for light HS of the surface body 12 and the comparatively small thickness ta. The visibility is particularly high when the surface body 12 is exposed to sun light.

In the following it is assumed that the masking layer 21 is part of the finished surface body 12. The surface body 12 as such has the surface body thickness ta whereas in the area of the masking layer 21 the surface body 12 has a total thickness tt which is approximately the sum of the surface body 12 thickness ta and a first thickness t1 of the masking layer 21. Due to the gaps 22 the surface body 12 does not have a constant thickness. Consequently, the stiffness varies and therefore sink marks 24 may be generated which are detrimental to a homogeneous appearance of the interior part 10.

Figure 2 shows a vehicle 11 by means of a principle top view that comprises a number of interior parts 26 according to the present invention, embodiments of which will be further explained in the following. The interior parts 26 of the vehicle 11 shown in Figure 2 may be embodied as an interior trim part such as instrument panels 28, door panels 30, center consoles 32, overhead consoles 33, vehicle seats 34 and headliners 35.

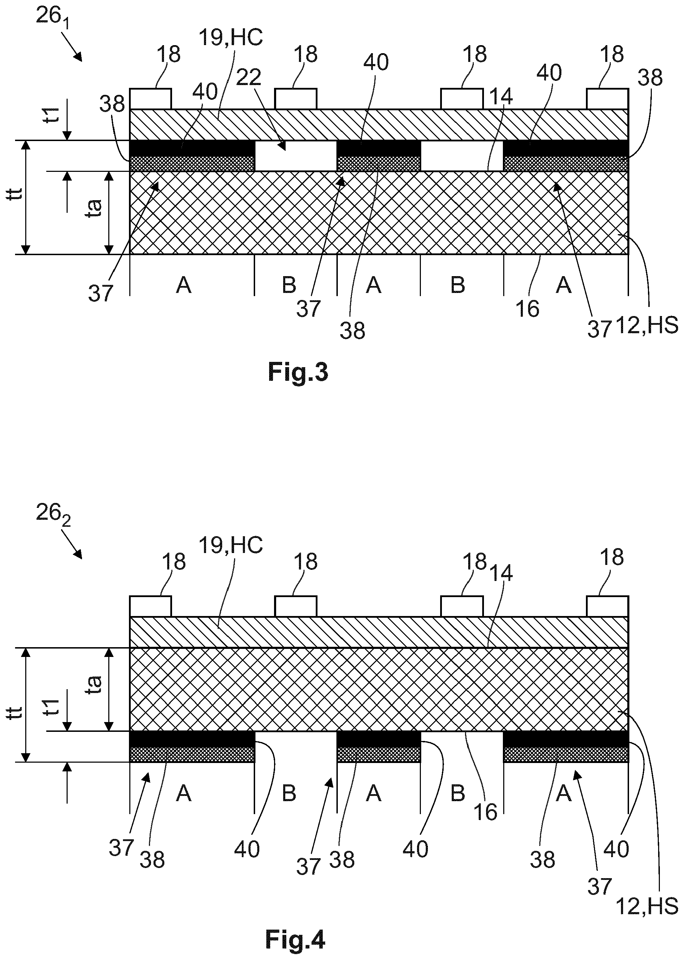

In Figure 3 a first embodiment of an interior part 26₁ is shown by a principle cross sectional view. The basic structure of the interior part 26₁ according to the first embodiment is to a large extent similar to the interior part 10 according to the prior art shown in Figure 1.

In the first embodiment it is assumed that the surface body 12 has a color significantly different from black such as brown or beige. This color is symbolized by the crosshatching of the surface body 12 in Figure 3. The interior part 26₁ comprises a masking section 37 having a first layer 38 and a second layer 40 that are arranged on top of each other.

The first layer 38 is directly applied on the first surface 14 of the surface body 12 and has a color that is at least similar to the color of the surface body 12 like brown or beige and/or to the carrier body 19. The second layer 40 is black or at least of a very dark color and therefore opaque or almost opaque. While the first layer 38 is facing the passenger compartment 20 the second layer 40 is facing the light emitting device 18. As a consequence neither the first layer 38 nor the second layer 40 of the interior part 26₁ of the first embodiment are visible from the passenger compartment 20. The interior part 26₁ has a very homogeneous appearance even if exposed to sun light or other bright light sources.

It is noted that in the interior part 10 of the prior art gaps 22 are formed within the masking section 37 or within the masking layer 21, respectively. The light emitted from the light emitting device 18 can pass through the gaps 22. As a consequence the areas marked with A and which are covered with the first layer 38 appear dark whereas areas marked with B appear brighter.

Figure 4 shows a second embodiment of an interior part 26₂. The basic structure of the interior part 26₂ according to the second embodiment is to a large extent similar to the interior part 26₁ according to the first embodiment shown in Figure 3. The main difference is that the masking section 37 is applied to the second surface 16 instead of the first surface 14. Nevertheless the masking section 37 is hardly visible form the passenger compartment 20 mainly due to its small thickness t1.

As mentioned gaps 22 are formed within the masking section 37 or within the masking layer 21, respectively. The formation of sink marks 24 as discussed for the interior part 10 according to the prior art (see Figure 1) may not be avoided in the first embodiment of the interior part 26₁.

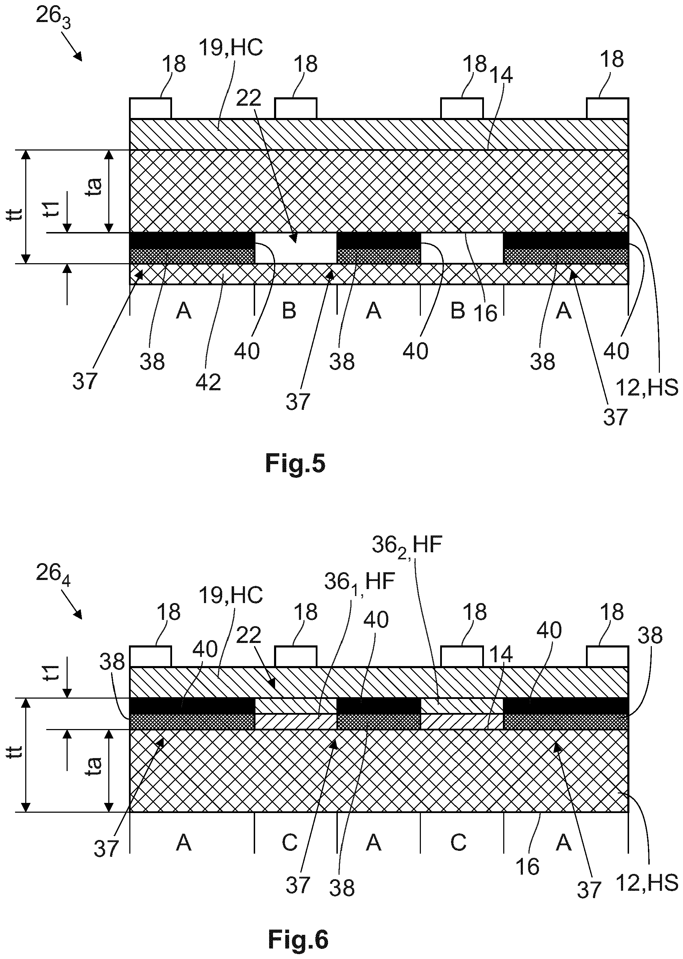

Figure 5 shows a cross section through a third embodiment of an interior part 26₃. The basic structure of the interior part 26₃ according to the third embodiment is to a large extent similar to the interior part 26₂ according to the second embodiment shown in Figure 4. However, an additional surface body 42 is arranged on the masking section 37 and is facing the passenger compartment 20. The color of the additional surface body 42 may be the same as of the surface body 12 or the first layer 38. This configuration is shown in Figure 5 and indicated by the crosshatching of the additional surface body 42. However, the additional surface body may also be transparent or translucent without any specific coloring. As in the first embodiment of the interior part 26₁ also in the third embodiment of the interior part 26₃ gaps 22 are formed.

It should be noted that alternatively the surface body 12 could be also transparent or almost transparent if the additional surface body 42 is translucent.

Figure 6 shows a cross section through a fourth embodiment of an interior part 26₄ according to the invention. In the fourth embodiment of the interior part 26₄ at least one filling layer 36 is applied to the first surface 14 at least partially filling at least some of the gaps 22. In the fourth embodiment a first filling layer 36₁ is applied on the first surface 14 and flush with the first layer 38. Moreover, a second filling layer 36₂ is applied on the first filling layer 36₁ and flush with the second layer 40. The finished surface body 12 now has the same or almost the same total thickness tt such that it also possesses the same or almost the same overall physical properties such as thermal resistance and shrinkage. Further the stiffness is similar.

The formation of sink marks 24 detrimental to a homogeneous appearance of the interior part 26₄ is effectively avoided.

The filling layer transmittance HF is chosen to be as high as possible to approach 100% (transparent). Like in Figure 1 areas marked with A are covered with the masking layer 21 and appear dark whereas areas marked with C are covered by the filling layer 36 and appear brighter.

The light patterns provided by the interior parts 26₁ to 26₄ are almost the same as the one provided by the interior part 10 of the prior art shown in Figure 1. However, the interior part 26₁ to 26₄ as such and the light pattern provide a more homogeneous appearance compared to the interior part 10 of the prior art. The quality level of the vehicle 11 equipped with an interior part 26₁ to 26₄ of the first to fourth embodiment is increased compared to the prior art.

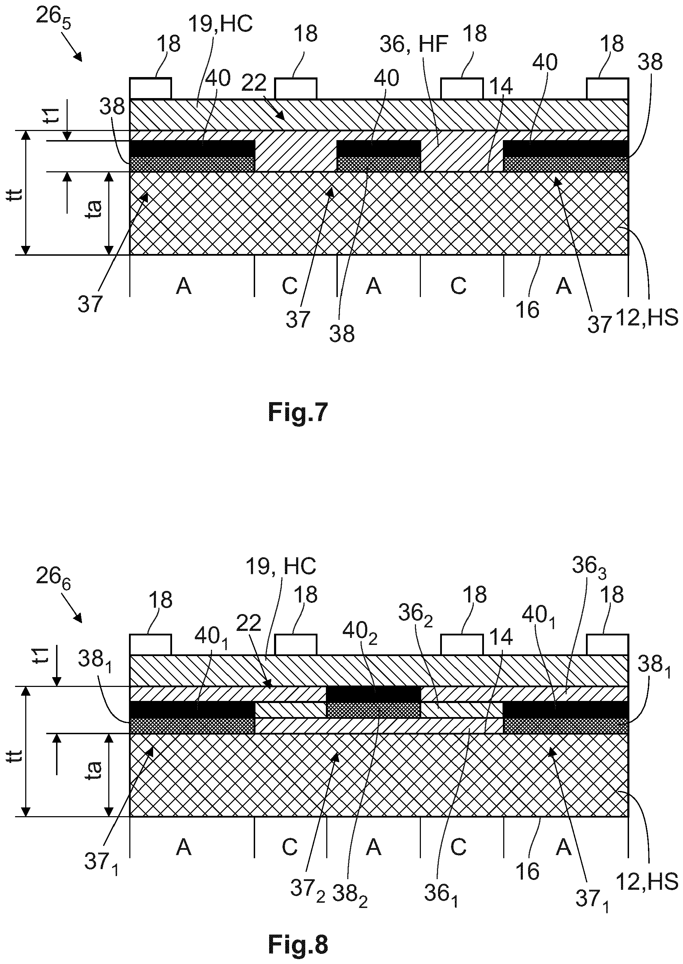

Figure 7 shows a fifth embodiment of the interior part 26₅ according to the invention. In the fifth embodiment only one coherent filling layer 36 extends beyond the gaps 22 and embeds the masking section 37. In other words the surface of the second layer 40 facing to the light emitting device 18 is covered by the filling layer 36. While the first thickness t1 of the masking section 37 is the same as in the fourth embodiment the total thickness tt is bigger compared to the fourth embodiment.

Figure 8 shows a sixth embodiment of the interior part 26₆ of the present invention. The sixth embodiment of the interior part 26₆ comprises a first masking section 37₁ and a second masking section 37₂. The first masking section 37₁ comprises a primary first layer 38₁ and a primary second layer 40₁ applied on the primary first layer 38₁. The second masking section 37₂ comprises a secondary first layer 38₂ and a secondary second layer 40₂ that is applied on the primary first layer 38₁. A first filling layer 36₁ is applied on the first surface 14. While the first masking section 37₁ is applied on the first surface 14 the second masking section 37₂ is applied on the first filling layer 36₁.

A second filling layer 36₂ is applied on the first filling layer 36₁. Moreover, a third filling layer 36₃ is arranged on the primary second layer 40₁ and on the second filling layer 36₂. As a consequence, the first masking section 37₁ is arranged at a distance further from the light emitting device 18 compared to the second masking section 37₂.

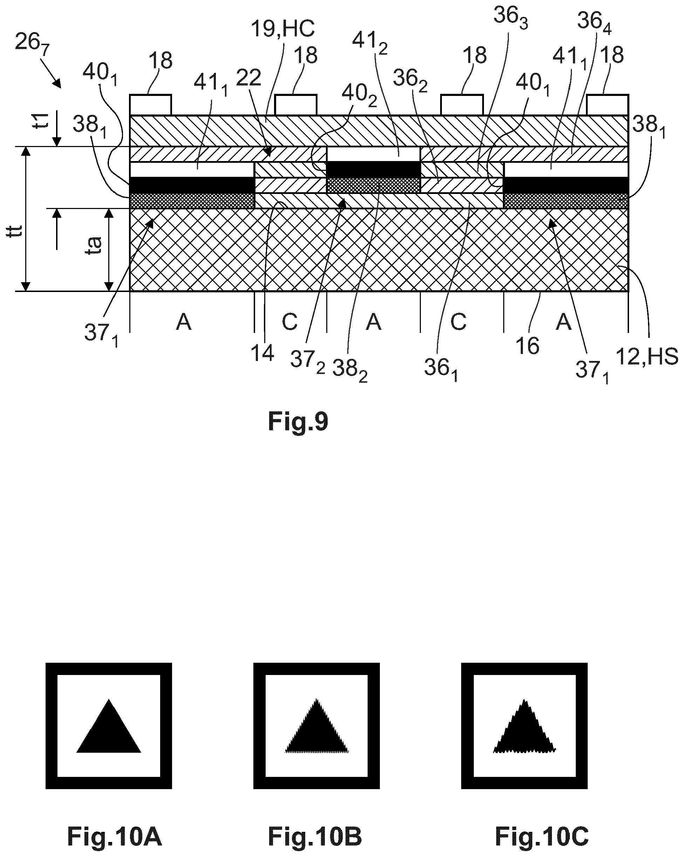

Figure 9 shows a seventh embodiment of the interior part 26 according to the invention.

The basic design is the same as the one of the sixth embodiment. A first filling layer 36₁ is applied on the first surface 14 of the surface body 12 and is flush with the primary first layer 38₁. The secondary first layer 38₂ is applied on the first filling layer 36₁. A second filling layer 36₂ is applied to the first filling layer 36₁ and flush with the primary second layer 40₁ and the secondary first layer 38₂.

Moreover, the first masking section 37₁ comprises a primary third layer 41₁ that is applied on the primary second layer 40₁ and a secondary third layer 41₂ applied on the secondary second layer 40₂. A third filling layer 36₃ is applied on the second filling layer 36₂ and is flush with the primary third layer 41₁ and the secondary second layer 40₂. A fourth filling layer 36₄ is arranged on the third filling layer 36₃ covering the primary third layer 41₁ and is flush with the secondary third layer 41₂.

The primary third layer 41₁ and the secondary third layer 41₂ have reflective properties such that a high degree of light emitted from the light emitting device 18 is reflected back into the carrier body 19. From the carrier body 19 the light may penetrate the filling layers 36₁ to 36₄ such that this portion of light may be perceptible from the passenger compartment 20. The exploitation of the emitted light is thus improved.

Also in this case the first masking section 37₁ and the second masking section 37₂ are arranged at different distances from the light emitting devices 18 such that patterns of different sharpness may be created.

The effect of the different distances is illustrated in Fig-ures 10A to 10C which show a light pattern provided by the interior part 26₄, 26₅ according to the fourth or fifth embodiment. The light pattern comprises a triangle encompassed by a frame with a bright area arranged in between. The frame and the triangle may be generated by the second layer 40 whereas the bright area may be generated by the filling layers 36. When comparing the light patterns illustrated in Figures 10A to 10C one notes that the triangle and the frame in Figure 10A have a very sharp and clear contour. In Figure 10B the contour of the triangle is more blurred whereas the contour of the frame is still very sharp and clear. In Figure 10C the contour of the triangle is even more blurred whereas the contour of the frame is still very sharp and clear. The degree of blurring can be chosen by the distance of the respective masking section 37 to the second surface 16. The sharpness of a contour generated by the first masking section 37₁ of the sixth or seventh embodiment may thus be different from the sharpness of a contour generated by the second masking section 37₂.

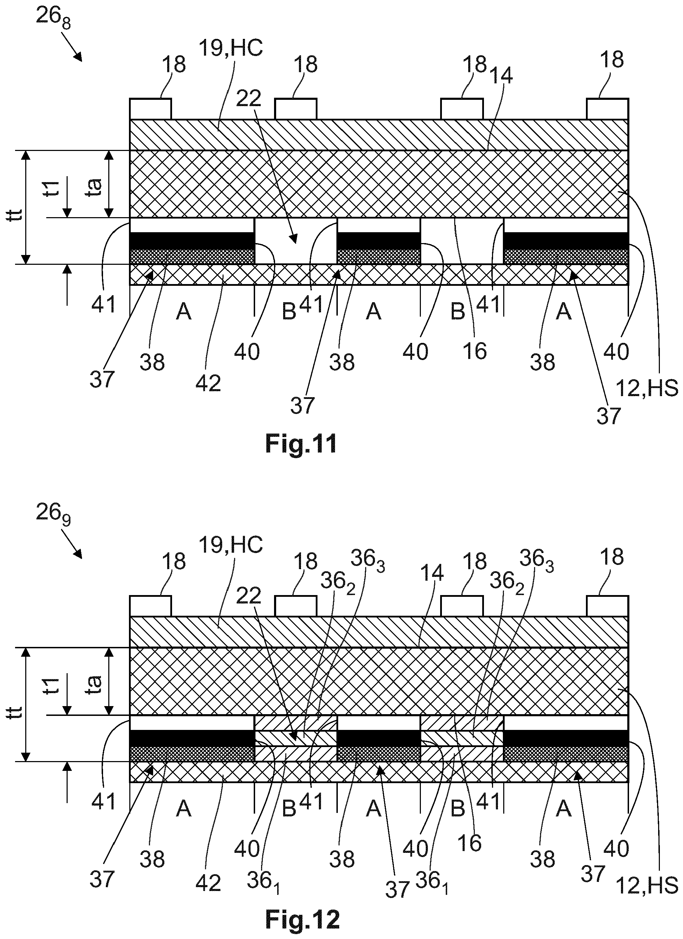

Figure 11 shows an eighth embodiment of the interior part 26₈ not according to the invention.

The basic design is the same as the one of the third embodiment. The main difference is that the masking section 37 has the same constitution as in the seventh embodiment, i.e., it comprises the third layer 41. It is noted that gaps 22 are formed within the masking section 37.

Figure 12 shows a ninth embodiment of the interior part 29₉ which is according to the invention.

The basic design is the same as the one of the eighth embodiment. However, a first filling layer 36₁ is arranged on the additional surface body 42 and flush with the first layer 38. A second filling layer 36₂ is applied on the first filling layer 36₁ and flush with the second layer 40. A third filling layer 36₃ is flush with the third layer 41. The gap 22 is thus filled and the formation of sink marks 24 (see Figure 1) avoided.

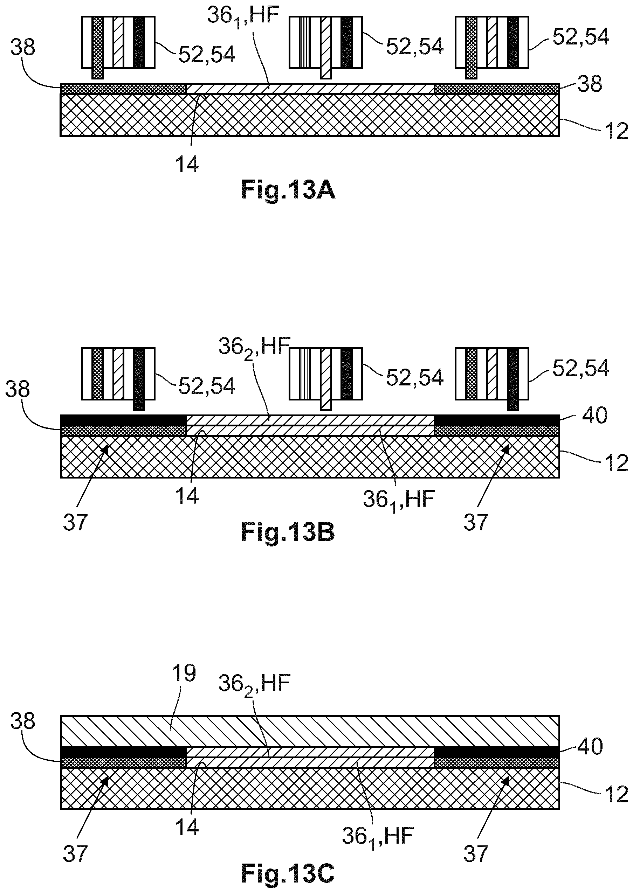

Figures 13A to 13C are principle sketches showing a first method to apply different layers on the surface body 12. In this case a first layer 38 having a color adjusted to the color of the surface body 12, a second layer 40 being opaque or almost opaque and a filling layer 36 having a filling layer transmittance HF are applied to the first surface 14 of the surface body 12 by means of an application device 52, here by an inkjet printer 54. The first layer 38, the second layer 40 and the filling layer 36 are constituted by ink. While the ink of the second layer 40 may comprise a large number of black pigments the ink of the first layer 38 may pigments having the same or almost the same color as the color of the surface body 12. The ink of the filling layer 36 may only comprise the matrix but no color pigments. The three inks can be applied by the printer 54 in the same application step and flush with each other. It is also possible to apply further layers comprising their own first layers 38, second layers 40 and filling layers 36. Highly individual light patterns can thus be generated. Laser printing may also be used.

In the first step as shown in Figure 13A the first layer 38 and the first filling layer 36₁ are applied to the first surface 14 of the surface body 12. The first layer 38 and the first filling layer 36 are flush with each other.

In the second step that is shown in Figure 13B the second layer 40 is applied to the first layer 38 and to the first filling layer 36₁ also flush with each other.

In Figure 13C the carrier body 19 is bonded to the surface body 12 such that it contacts the second layer 40 and the second filling layer 36₂.

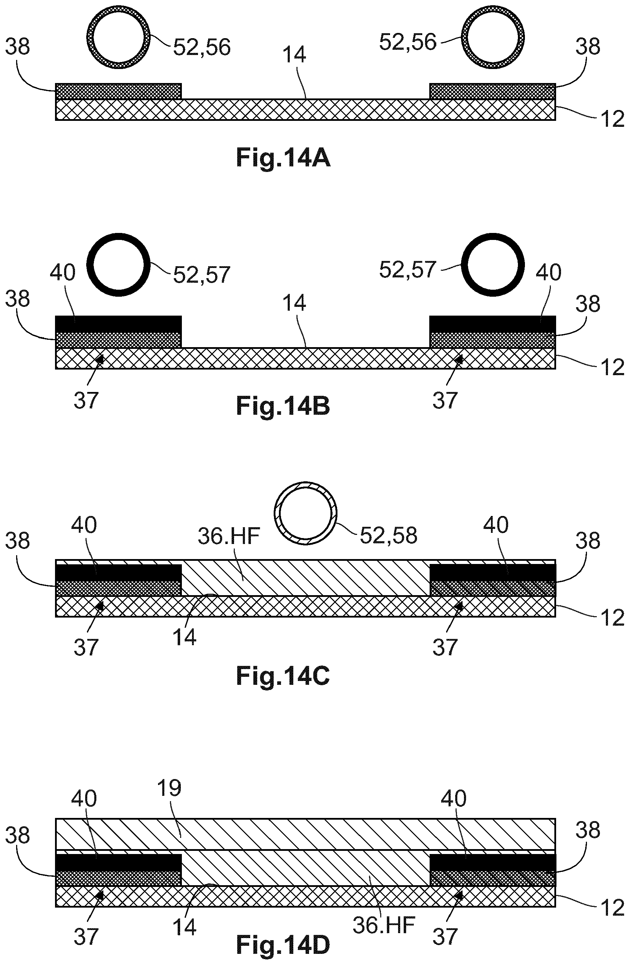

Figures 14A to 14D are principle sketches showing a second method to apply different layers on the first surface 14 of the surface body 12. The application device 52 comprises a first layer application device 56, in this case a cylinder or a screen with a scraper by which the masking layer 21 may be applied to the first surface 14 of the surface body 12 (Figure 14A). Moreover, the application device 52 comprises a second layer application device 57, also a cylinder by which the second layer 40 may be applied to the first surface 14 of the surface body 12 (Figure 14B). Between the application of the first layer 38 and the second layer 40 a drying and/or curing step is performed.

The filling layer 36 is applied to the first surface 14 by a filling layer application device 58, in this case also a cylinder. The filling layer 36 may be applied such that the first layer 38 and the second layer 40 are embedded by the filling layer 36 (Figure 14C). This method of applying the layers on the surface body 12 is also referred to as "roll-to-roll printing". Rotary printing, screen printing, transfer printing, offset printing, intaglio printing/rotogravure are similar techniques that may be employed. Depending on the application techniques it may not be possible to apply the filling layer 36 flush with the first layer 38 or the second layer 40 or the third layer 41.

Once the first layer 38, the second layer 40 and the filing layer 36 are applied and dried or cured the surface body 12 is bonded to the carrier body 19, e.g. by laminating (Figure 14D) .

### Reference list

- 10: interior part according to the prior art
- 11: vehicle
- 12: surface body
- 14: first surface
- 16: second surface
- 18: light emitting device
- 19: carrier body

- 20: passenger compartment
- 21: masking layer
- 22: gap
- 24: sink marks
- 26: interior part
- 26₁ to 26₅: interior part
- 28: instrument panel

- 30: door panel
- 32: center console
- 33: overhead console
- 34: vehicle seat
- 35: headliner
- 36: filling layer
- 36₁: first filling layer
- 36₂: second filling layer
- 36₃: third filling layer
- 36₄: fourth filling layer
- 37: masking section
- 37₁: first masking section
- 37₂: second masking section
- 38: first layer
- 38₁: primary first layer
- 38₂: secondary first layer

- 40: second layer
- 40₁: primary second layer
- 40₂: secondary second layer

- 41: third layer
- 41₁: primary third layer
- 41₂: secondary third layer
- 42: additional surface body

- 52: application device
- 54: printer
- 56: first layer application device
- 57: second layer application device
- 58: filling layer application device

- A - C: area
- HC: transmittance of the carrier body
- HF: transmittance of the filling layer
- HS: transmittance of the surface body
- HM: first transmittance of the first layer

- ta: surface body thickness
- tt: total thickness
- t1: first thickness

## Claims

1. Interior part (26) of a vehicle (11), comprising
- at least one carrier body (19) having a transmittance for light (HC) of at least 1%,
- a surface body (12)
o forming a first surface (14) and a second surface (16),
o having a transmittance for light (HS) of at least 1%,
o being laminated to the carrier body (19) on the first surface (14), and
o having a given color
- at least one light emitting device (18) emitting light and arranged such that the light emitted by the light emitting device (18) impinges on the first surface (14),
- at least one masking section (37) applied to the first surface (14) or the second surface (16), the masking section (37) comprising
o a first layer (38) and a second layer (40) being arranged on top of each other,
o the first layer (38) having a color adjusted to the color of the surface body (12),
o the masking section (37) partially covers the first surface (14) or the second surface (16) by forming gaps (22),
**characterized in that** the interior part (26) comprises
- a first filling layer (36) that is flush with the first layer (38), and
- a second filling layer (36) that this flush with the second layer (40).

2. Interior part (26) according to claim 1, **characterized in that**
- the first filling layer (36) applied to the first surface (14) filling at least some of the gaps (22) and having a filling layer (36) transmittance for light (HF).

3. Interior part (26) according to one of the preceding claims,
**characterized in that** the masking section (37) further comprises a third layer (41), the third layer (41) having reflective properties.

4. Interior part (26) according to claim 3,
**characterized in that** the interior part (26) comprises a third filling layer (36) that is flush with the third layer (41).

5. Interior part (26) according to one of the preceding claims,
**characterized in that** the interior part (26) comprises
- at least one first masking section (37) comprising
o at least one primary first layer (38₁) and at least one primary second layer (40₁) being arranged on top of each other,
o the first masking section (37) being arranged on the first surface (14),
- a filling layer (36) applied to the first surface (14),
- at least one second masking section (37) comprising
o at least one primary second layer (40₁) and at least one secondary second layer (40₂) being arranged on top of each other,
∘ the second masking section (37) being arranged on the filling layer (36).

6. Interior part (26) according to one of the preceding claims, **characterized in that**
- at least one masking section (37) is applied to the second surface (16) and
- at least one additional surface body is laminated to the second surface (16).

7. Interior part (26) according to one of the claims 2 to 6,
**characterized in that** the gaps (22) that are not filled by the filling layer (36) being arranged such that the gaps (22) are invisible from the interior of the vehicle (11).

8. Method for manufacturing a surface body (12) of an interior part (26) of one of the preceding claims, the interior part (26) being of a vehicle (11), comprising the steps of:
- providing a surface body (12), and
o printing the first layer (38) and the first filling layer (36) on the first surface (14), the first filling layer (36) being flush with the first layer (38) and
∘ printing the second layer (40) on the first layer by means of a printer (54) in the same step, or
- providing a surface body (12), and
o applying the first layer (38) on the first surface (14) by means of a first layer application device (56),
∘ drying and/or curing the first layer (38), and
o applying the second layer (40) on the first layer (14) by means of a second layer application device (58).

9. Method according to claim 8, **characterized in that** the method comprises the step of
- printing the filling layer (36) on the first surface (14) by means of a printer (54).

10. Method according to claim 8, **characterized in that** the method comprises the step of
- printing the filling layer (36) on the first surface (14) by means of filling layer application device (58).

11. Method according to one of the claims 9 or 10, **characterized in that** the surface body (12) is bonded to a carrier body (19) after at least the first layer (38) and the filling layer (36) are applied to the surface body (12).

12. Vehicle (11), comprising an interior part (26) according to one of the claims 1 to 7 or manufactured according to one of the claims 8 to 11.

## Patentansprüche

1. Innenteil (26) eines Fahrzeugs (11), das aufweist:
- zumindest einen Trägerkörper (19) mit einer Lichtdurchlässigkeit (HC) von zumindest 1%,
- einen Oberflächenkörper (12)
o der eine erste Oberfläche (14) und eine zweite Oberfläche (16) bildet,
o der eine Lichtdurchlässigkeit (HS) von zumindest 1% aufweist,
∘ auf der ersten Oberfläche (14) an den Trägerkörper (19) laminiert ist, und
∘ der eine gegebenen Farbe aufweist
- zumindest eine Licht emittierende Vorrichtung (18), die Licht emittiert und so angeordnet ist, dass das durch die Licht emittierenden Vorrichtung (18) emittierte Licht auf die erste Oberfläche (14) auftrifft,
- zumindest einen Maskierungsabschnitt (37), der auf die erste Oberfläche (14) oder die zweite Oberfläche (16) aufgebracht ist, wobei der Maskierungsabschnitt (37) aufweist
o eine erste Schicht (38) und eine zweite Schicht (40), die übereinander angeordnet sind,
∘ die erste Schicht (38) eine Farbe aufweist, die auf die Farbe des Oberflächenkörpers (12) eingestellt ist,
oder Maskierungsabschnitt (37) die erste Oberfläche (14) oder die zweite Oberfläche (16) durch Bilden von Lücken (22) teilweise abdeckt,
**dadurch gekennzeichnet, dass** der Innenteil (26) aufweist:
- eine erste Füllschicht (36), die mit der ersten Schicht (38) bündig ist, und
- eine zweite Füllschicht (36), die mit der zweiten Schicht (40) bündig ist.

2. Innenteil (26) nach Anspruch 1,
**dadurch gekennzeichnet, dass**
- die erste Füllschicht (36), die auf die erste Oberfläche (14) aufgebracht ist, zumindest einige der Lücken (22) füllt und eine Füllschicht (36) mit Lichtdurchlässigkeit (HF) aufweist.

3. Innenteil (26) nach einem der vorhergehenden Ansprüche,
**dadurch gekennzeichnet, dass** der Maskierungsabschnitt (37) weiterhin eine dritte Schicht (41) aufweist, wobei die dritte Schicht (41) reflektierende Eigenschaften aufweist.

4. Innenteil (26) nach Anspruch 3,
**dadurch gekennzeichnet, dass** der Innenteil (26) eine dritte Füllschicht (36) aufweist, die mit der dritten Schicht (41) bündig ist.

5. Innenteil (26) nach einem der vorhergehenden Ansprüche, **dadurch gekennzeichnet, dass** der Innenteil (26) aufweist:
- zumindest einen ersten Maskierungsabschnitt (37), der aufweist:
o zumindest eine primäre erste Schicht (38₁) und zumindest eine primäre zweite Schicht (40₁), die übereinander angeordnet sind,
∘ wobei der erste Maskierungsabschnitt (37) auf der ersten Oberfläche (14) angeordnet ist,
- wobei eine Füllschicht (36) auf der ersten Oberfläche (14) aufgebracht ist,
- zumindest einen zweiten Maskierungsabschnitt (37), der aufweist
o zumindest eine primäre zweite Schicht (40₁) und zumindest eine sekundäre zweite Schicht (40₂), die übereinander angeordnet sind,
∘ wobei der zweite Maskierungsabschnitt (37) auf der Füllschicht (36) angeordnet ist.

6. Innenteil (26) nach einem der vorhergehenden Ansprüche, **dadurch gekennzeichnet, dass**
- zumindest ein Maskierungsabschnitt (37) auf die zweite Oberfläche (16) aufgebracht ist und
- zumindest ein zusätzlicher Oberflächenkörper auf die zweite Oberfläche (16) laminiert ist.

7. Innenteil (26) nach einem der Ansprüche 2 bis 6,
**dadurch gekennzeichnet, dass** die Lücken (22), die nicht durch die Füllschicht (36) gefüllt sind, so angeordnet sind, dass die Lücken (22) vom Innenraum des Fahrzeugs (11) aus nicht sichtbar sind.

8. Verfahren zur Herstellung eines Oberflächenkörpers (12) eines Innenteils (26) nach einem der vorhergehenden Ansprüche, wobei der Innenteil (26) von einem Fahrzeug (11) ist, das die Schritte aufweist:
- Bereitstellen eines Oberflächenkörpers (12), und
o Drucken der ersten Schicht (38) und der ersten Füllschicht (36) auf die erste Oberfläche (14), wobei die erste Füllschicht (36) mit der ersten Schicht (38) bündig ist und
o Drucken der zweiten Schicht (40) auf die erste Schicht mittels eines Druckers (54) in demselben Schritt, oder
- Bereitstellen eines Oberflächenkörpers (12), und
o Aufbringen der ersten Schicht (38) auf die erste Oberfläche (14) mittels einer Vorrichtung (56) zum Aufbringen der ersten Schicht,
o Trocknen und/oder Aushärten der ersten Schicht (38), und
o Aufbringen der zweiten Schicht (40) auf die erste Schicht (14) mittels einer Vorrichtung (58) zum Aufbringen der zweiten Schicht.

9. Verfahren nach Anspruch 8, **dadurch gekennzeichnet, dass** das Verfahren den Schritt aufweist
- Drucken der Füllschicht (36) auf die erste Oberfläche (14) mittels eines Druckers (54).

10. Verfahren nach Anspruch 8, **dadurch gekennzeichnet, dass** das Verfahren den Schritt aufweist
- Drucken der Füllschicht (36) auf die erste Oberfläche (14) mittels einer Vorrichtung (58) zum Aufbringen der Füllschicht.

11. Verfahren nach einem der Ansprüche 9 oder 10, **dadurch gekennzeichnet, dass** der Oberflächenkörper (12) mit einem Trägerkörper (19) verbunden wird, nachdem zumindest die erste Schicht (38) und die Füllschicht (36) auf den Oberflächenkörper (12) aufgebracht worden sind.

12. Fahrzeug (11), das einen Innenteil (26) nach einem der Ansprüche 1 bis 7 aufweist oder nach einem der Ansprüche 8 bis 11 hergestellt ist.

## Revendications

1. Partie intérieure (26) d'un véhicule (11) comprenant :
- au moins un corps de support (19) ayant une transmittance lumineuse (HC) d'au moins 1%,
- un corps de surface (12),
* formant une première surface (14) et une seconde surface (16),
* ayant une transmittance lumineuse (HS) d'au moins 1%,
* étant laminé sur le corps de support (19) sur la première surface (14), et
* ayant une couleur donnée,
- au moins un dispositif photoémetteur (18) émettant de la lumière et étant organisé de façon que la lumière émise par le dispositif photoémetteur (18) arrive sur la première surface (14),
- au moins une section de masque (37) appliquée sur la première surface (14) ou sur la seconde surface (16),
la section de masque (37) comprenant :
* une première couche (38) et une seconde couche (40) l'une au-dessus de l'autre,
* la première couche (38) ayant une couleur réglée sur la couleur du corps de surface (12),
* la section de masque (37) couvrant partiellement la première surface (14) ou la seconde surface (16) en formant des intervalles (22),
partie intérieure (26) **caractérisée en ce qu'**elle comprend :
- une première couche de remplissage (36) qui est à niveau avec la première couche (38), et
- une seconde couche de remplissage (36) qui est à niveau avec la seconde couche (40).

2. Partie intérieure (26) selon la revendication 1,
**caractérisée en ce que**
- la première couche de remplissage (36) appliquée sur la première surface (14) remplissant au moins certains des intervalles (22) et ayant une transmittance de couche de remplissage (36) à la lumière (HF).

3. Partie intérieure (26) selon l'une des revendications précédentes,
**caractérisée en ce que**
la section de masque (37) comprend en outre une troisième couche (41), cette troisième couche (41) ayant des propriétés réfléchissantes.

4. Partie intérieure (26) selon la revendication 3,
**caractérisée en ce que**
la partie intérieure (26) comprend une troisième couche de remplissage (36) qui est à niveau avec la troisième couche (41).

5. Partie intérieure (26) selon l'une des revendications précédentes,
**caractérisée en ce que**
la partie intérieure (26) comprend :
- au moins une première section de masque (37) ayant :
* au moins une première couche primaire (38₁) et au moins une seconde couche primaire (40₁) installées l'une au-dessus de l'autre,
* la première section de masque (37) étant prévue sur la première surface (14),
- une couche de remplissage (36) appliquée sur la première surface (14),
- au moins une seconde section de masque (37) comprenant :
* au moins une seconde couche primaire (40₁) et une seconde couche secondaire (40₂) placées l'une au-dessus de l'autre,
* la seconde section de masque (37) étant prévue sur la couche de remplissage (36).

6. Partie intérieure (26) selon l'une des revendications précédentes, **caractérisée en ce que**
- au moins une section de masque (37) est appliquée sur la seconde surface (16), et
- au moins un corps additionnel de surface est laminé sur la seconde surface (16).

7. Partie intérieure (26) selon l'une des revendications 2 à 6,
**caractérisée en ce que**
les intervalles (22) ne sont pas remplis avec la couche de remplissage (36) organisée de façon que les intervalles (22) soient invisibles de l'intérieur du véhicule (11).

8. Procédé de fabrication d'un corps de surface (12) d'une partie inférieure (26) selon l'une des revendications précédentes,
la partie intérieure (26) étant celle d'un véhicule (11),
procédé comprenant les étapes suivantes consistant à :
- fournir un corps de surface (12), et
* imprimer la première couche (38) et la première couche de remplissage (36) sur la première surface (14), la première couche de remplissage (36) étant à niveau avec la première couche (38), et
* imprimer la seconde couche (40) sur la première couche avec une imprimante (54) dans la même étape, ou
- fournir un corps de surface (12), et
* appliquer la première couche (38) sur la première surface (14) par un premier dispositif d'application de couche (56),
* sécher et/ou durcir la première couche (38), et
* appliquer la seconde couche (40) sur la première couche (14) à l'aide d'un dispositif applicateur de seconde couche (58).

9. Procédé selon la revendication 8,
**caractérisé en ce qu'**il comprend l'étape consistant à :
- imprimer la couche de remplissage (36) sur la première surface (14) avec une imprimante (54).

10. Procédé selon la revendication 8,
**caractérisé en ce qu'**il comprend l'étape consistant à :
- imprimer la couche de remplissage (36) sur la première surface (14) à l'aide d'un dispositif applicateur de couche de remplissage (58).

11. Procédé selon l'une des revendications 9 ou 10,
**caractérisé en ce que**
le corps de surface (12) est fixé à un corps porteur (19) après avoir appliqué sur le corps de surface (12) au moins la première couche (38) et la couche de remplissage (36).

12. Véhicule (11) comprenant une partie intérieure (26) selon l'une des revendications 1 à 7 ou fabriqué selon l'une des revendications 8 à 11.
